# EUROPEAN PATENT SPECIFICATION

(11) **EP 2 266 840 B1**
(45) Date of publication and mention of the grant of the patent: **06.06.2012**
(21) Application number: 10166969.5
(22) Date of filing: 23.06.2010
(51) Int. Cl.: B60R 1/04, B60R 1/06, B60R 1/10

(54) **Device for viewing oblique forward area of vehicle**
Vorrichtung zum Betrachten des Schrägvorwärtsbereichs eines Fahrzeugs
Dispositif pour visualiser la zone avant oblique d'un véhicule

(30) Priority: 24.06.2009 JP 2009150247
(43) Date of publication of application: 29.12.2010
(73) Proprietor: Honda Motor Co., Ltd., Tokyo 107-8556 (JP)
(72) Inventor: Kishimoto, Yuya, Saitama 351-0193 (JP); Matsumoto, Yoshiyuki, Saitama 351-0193 (JP)
(74) Representative: Prechtel, Jörg

(56) References cited:
- WO-A1-86/05749
- WO-A1-96/15379
- WO-A1-2009/096587
- AU-A1- 2004 210 715

## Description

The present invention relates to a device for viewing an oblique forward area, of a vehicle according to the preamble part of claim 1.

Mirrors and cameras have been used as devices for enabling visual contact with the front side area of a vehicle. Viewing or vision devices that use mirrors have been disclosed and proposed in Japanese Patent Application Laid-Open Publication No. 2004-255915 (JP-A 2004-25 5915) and Japanese Patent Application Laid-Open Publication No. 2009-173246 (JP-A 2009-173246), for example.

In the vision device disclosed in JP-A 2004-255915, a first mirror which shows a front side area of a vehicle is provided to a sub-pillar on which a triangular sub-window glass is formed, the image appearing in the first mirror is reflected to a second mirror provided to a front pillar, and the image appearing in the second mirror is visible to the driver. Therefore, the driver has visual contact with the front side area of the vehicle via the second mirror.

However, with the vision device disclosed in JP-A 2004-255915, visual contact cannot be enabled with the front body, the side area in the vicinity of the front body, or the vicinity of the front wheel. Furthermore, although the second mirror can be directly seen by the driver and the orientation (angle) of the mirror can be adjusted as necessary, a problem is presented in that time is required to adjust the angle.

In the vision device of the generic kind disclosed in JP-A 2009-173246, a first reflective mirror for showing the front side area of a vehicle is provided to a mirror housing for housing a mirror main body, and the image appearing in the first reflective mirror is reflected to a second reflective mirror provided to a side surface of a front pillar inside the passenger compartment. The driver can see the front side area of the vehicle appearing in the second reflective mirror.

However, in this vision device as well, although the second mirror can be directly seen by the driver and the orientation (angle) of the mirror can be adjusted as necessary, a problem is presented if that time is required to adjust the angle.

Another example of a vision device showing a front side area of a vehicle is disclosed in the intermediate publication WO 2005/096587 A1

It is an object of the present invention to provided an oblique forward vision device in which a turning direction of a second reflective mirror is regulated and an angle is easily adjusted.

According to a first aspect of the present invention, there is provided a device for viewing an oblique forward area of a vehicle, comprising: a first mirror housing constituting a door mirror mounted to a door that forms part of a vehicle body side part; a mirror body housed and held in the first mirror housing; a first reflective mirror, provided on a front surface of the first mirror housing, for showing a desired area from forward to side of the vehicle body side part; a second reflective mirror for reflecting light from the first reflective mirror to a passenger; and turning direction regulation means for turnably supporting the second reflective mirror on a passenger-compartment-side surface of a front pillar supporting the door so as to regulate a turning direction of the second reflective mirror.

In this arrangement, when an orientation (angle) of the second reflective mirror is adjusted, the second reflective mirror is turned only in a predetermined direction by a turning direction regulation mechanism, the second reflective mirror is prevented from being adjusted excessively or insufficiently, i.e., needless turning of the second reflective mirror is prevented, and it is easy to adjust the orientation of the second reflective mirror.

Preferably, the turning direction regulation means comprises an upright mirror support shaft for supporting the second reflective mirror, and the mirror support shaft is inclined a predetermined angle toward a widthwise center of the vehicle relative to a vertical line. With this arrangement, the turning direction of the second reflective mirror is regulated by the mirror support shaft, and the structure is simplified. When the second reflective mirror is adapted to different eye levels for drivers of varying height, the turning direction is regulated by the incline of the mirror support shaft, and the work of adjusting the second reflective mirror is simplified.

Desirably, the turning direction regulation means comprises an upright mirror support shaft for supporting the second reflective mirror, and the mirror support shaft is inclined a predetermined angle frontward in a longitudinal direction of the vehicle relative to a vertical line. As a result, a regulating function can be performed by the mirror support shaft, and the structure for regulating the turning direction is simplified. When the second reflective mirror is adapted to different eye levels for drivers of varying height, the turning direction is regulated by the mirror support shaft, and the work of adjusting the second reflective mirror is simplified.

In a preferred form, the second reflective mirror is substantially square in shape and has a substantially horizontal top edge and bottom edge, a first push indicator provided on a surface of an upper corner near an inside surface of the vehicle body, and a second push indicator provided on a surface of a lower corner near a widthwise direction center of the vehicle. Thus, when an orientation of the second reflective mirror is adjusted, the push position of the second reflective mirror can be clearly indicated to the passenger, and adjusting the turning direction and angle becomes even easier.

In a desired form, the turning direction regulation means comprises a ball joint for supporting the second reflective mirror on the front pillar, and a guiding part through which passes an arm part that extends from the ball joint to the second reflective mirror, the guiding part guiding the arm part so as to regulate the turning direction of the second reflective mirror. As a result, the trajectory of the second reflective mirror is established by the guiding part, and the turning direction can be regulated more acutely.

It is desirable that the front pillar comprise a second mirror housing for housing the second reflective mirror. The second mirror housing may include inside thereof a stopper part for restricting a turning angle of the second reflective mirror. As a result, in addition to the turning trajectory of the second reflective mirror being regulated, the turning angle can also be regulated, the second reflective mirror is prevented from being turned needlessly, and the turning angle is easily adjusted.

Certain preferred embodiments of the present invention will be described in detail below, by way of example only, with reference to the accompanying drawings, in which:
FIG. 1 is perspective view illustrating a front part of a vehicle employing an oblique forward vision device according to a first embodiment of the present invention, as seen from inside a passenger compartment;
FIG. 2 is a front view showing a door mirror of FIG. 1;
FIG. 3 is a front view showing a second reflective mirror as seen in the direction of arrow 3 of FIG. 1;
FIG. 4 is an enlarged cross-sectional view taken along line 4-4 of FIG. 3;
FIG. 5A is a schematic view showing the second reflective mirror adjusted angularly to reflect a greater area, whilst FIG. 5B is a view similar to FIG. 5A but showing the second reflective mirror set to reflect a standard area;
FIG. 6A is a front view showing a second reflective mirror according to a second embodiment of the present invention, FIG. 6B is an enlarged cross-sectional view taken along line 6B-6B of FIG. 6A, and FIG. 6C is a perspective view showing a turning angle restricting plate having a guiding part;
FIG. 7A is a front view showing a second reflective mirror according to a third embodiment of the present invention, whilst FIG. 7B is an enlarged cross-sectional view taken along line 7B-7B of FIG. 7A;
FIG. 8A is a perspective view showing a front part of a vehicle, as seen from inside a passenger compartment of the vehicle, employing a second reflective mirror according to a fourth embodiment of the present invention, whilst FIG. 8B is a view of the second reflective mirror as seen in the direction of arrow 8B of FIG. 8A; and
FIG. 9 is a front view of a second reflective mirror according to a fifth embodiment of the present invention.

### (Embodiment 1)

An oblique forward vision device 11 for a vehicle according to a first embodiment of the present invention enables visual contact with the left-front side area of a vehicle 12, wherein an image portrayed on a first reflective mirror 15 provided to a door mirror 14 outside a passenger compartment 13 is shown in a second reflective mirror 16 disposed inside the passenger compartment 13.

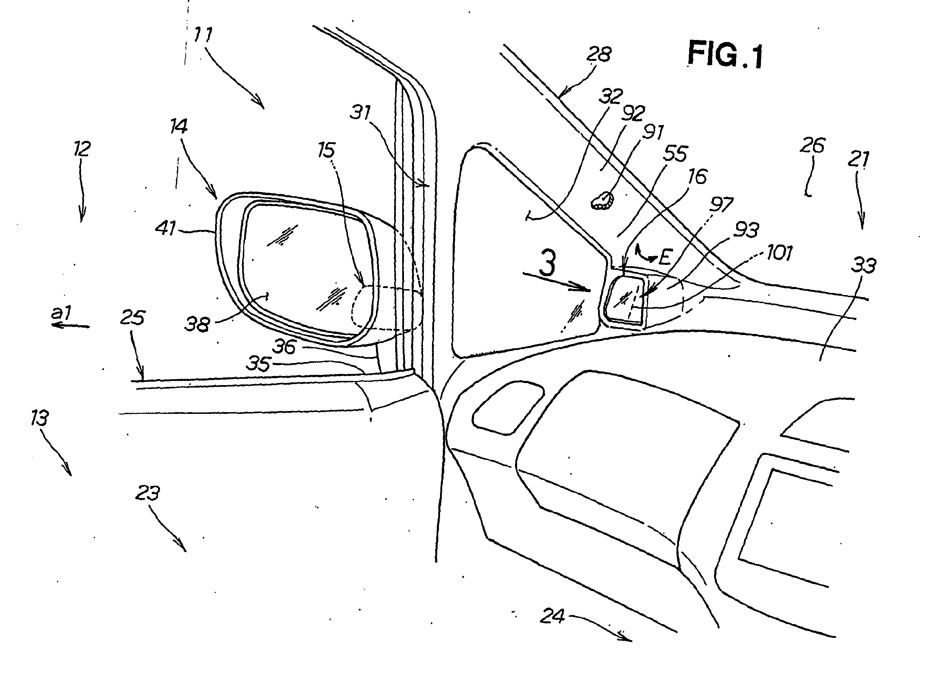

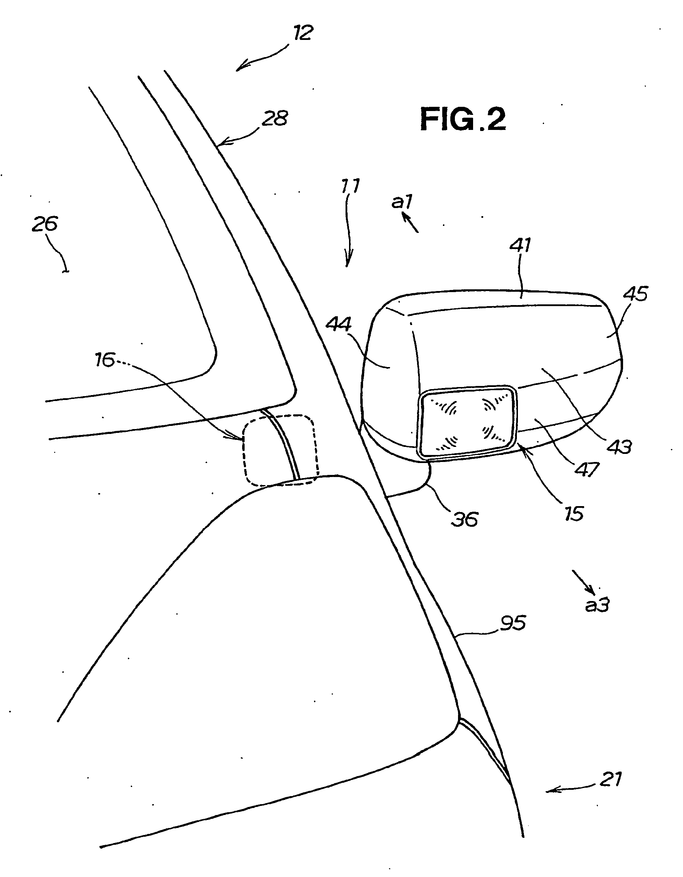

The vehicle 12 comprises a front pillar 28 for supporting the left and right ends of a windshield 26, a sub-pillar 31 extending downward from the middle of the front pillar 28, a sub-window glass 32 supported by the front pillar 28 and the sub-pillar 31, and a device 11 for enabling visual contact with the front side area of the vehicle 112, as shown in FIGS. 1 and 2. The reference numeral 13 indicates the passenger compartment, 21 indicates a front body, 23 indicates a passenger seat, 24 indicates a driver seat, 25 indicates a left front door, and 33 indicates an instrument panel.

Outside of the passenger compartment 13, the door mirror 14 comprises a supporting part 36 mounted on the upper front part 35 of the left front door 25, a mirror main body 38 for portraying an image of the rear area of the vehicle (the direction of arrow al), and a first mirror housing 41 for supporting and housing the mirror main body 38.

The supporting part 36 supports the first mirror housing 41 so as to enable it to turn, i.e., to fold inward toward the vehicle body side surface. The first mirror housing 41 is made of a resin and molded into a box shape, having a front wall part 43 facing toward the front of the vehicle 12 (in the direction of arrow a3), an inside part 44 continuing from the front wall part 43, and an outside part 45. The first reflective mirror 15 is provided integrally to a bottom half part 47 of the front wall part 43.

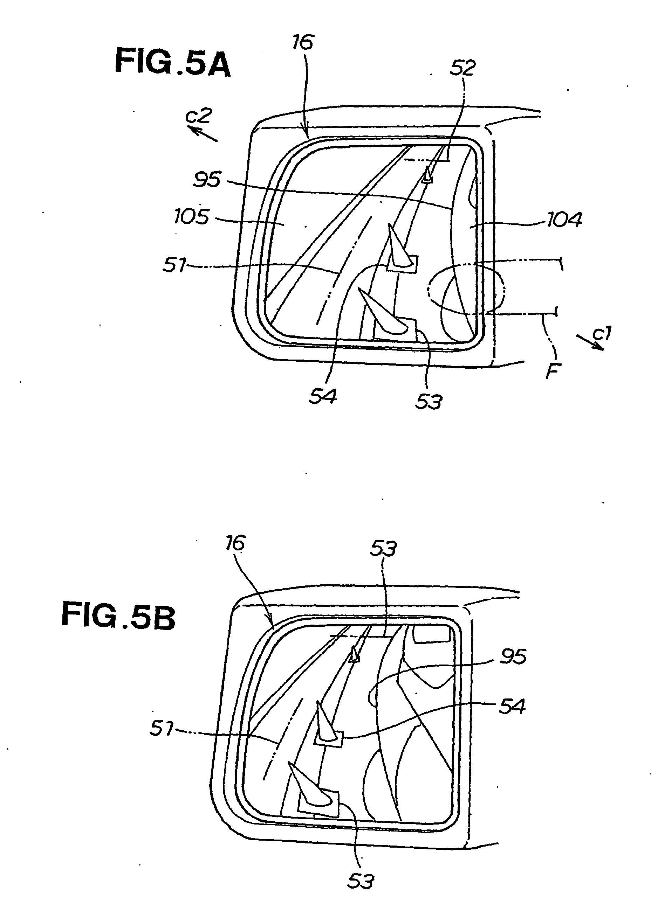

The first reflective mirror 15 is a convex mirror, and the radius and orientation of the convex surface are designed so that the left-front side area of the vehicle 12 is shown in the second reflective mirror 16 as shown in FIG. 5. The second reflective mirror 16 is a plane mirror.

The front pillar 28 comprises a steel front pillar main body 91 and a plastic front pillar internal member 92 mounted to the front pillar main body 91. A second mirror housing 93 of the second reflective mirror 16 is integrally molded from the front pillar internal member 92.

Next, the oblique forward vision device 11 according to the first embodiment will be described in FIGS. 1 through 4.

The door mirror 14 is mounted to a vehicle body side part 95 including the door 25, and is comprised of the mirror main body 38 and the mirror housing 41 which houses and holds the mirror main body 38.

The oblique forward vision device 11 comprises the first reflective mirror 15, which is provided to the front surface of the mirror housing 41 (the front wall part 43) and which shows a desired area from the front of the vehicle body side part 95 (a front visual limit position 52 shown in FIG. 5A) to the side (a side visual limit position 51 shown in FIG. 5A), and the second reflective mirror 16 which reflects the light from the first reflective mirror 15 to the passenger (the driver). The second reflective mirror 16 is supported so as to be capable of turning (in the direction of arrow E) on a passenger compartment inside surface 55 of the front pillar 28 which supports the door 25, and is provided with turning direction regulation means 97 for regulating the turning direction. The passenger compartment inside surface 55 is, specifically, the side surface of the front pillar internal member 92 inside the passenger compartment

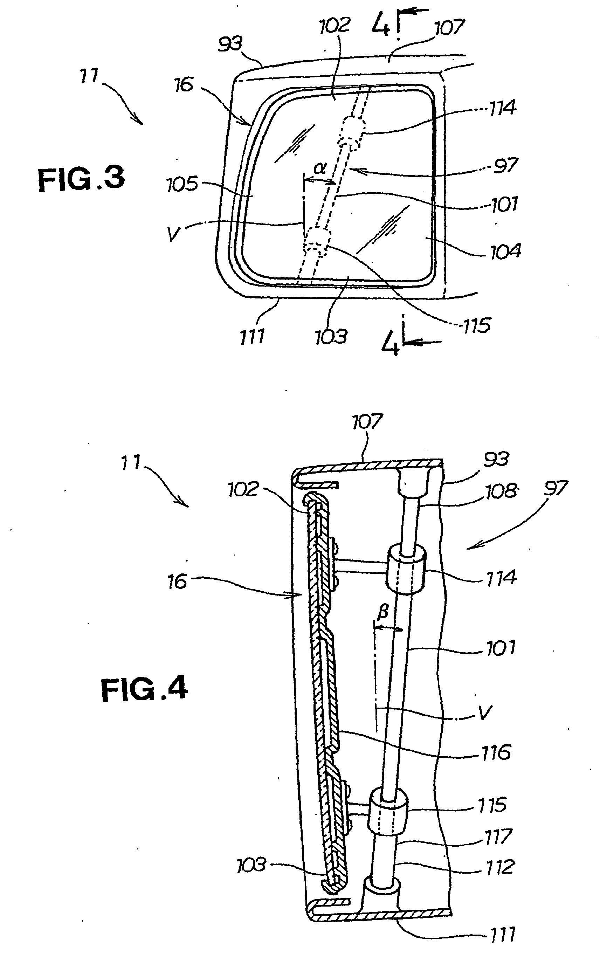

The turning direction regulation means 97 is comprised of an upright mirror support shaft 101 which supports the second reflective mirror 16, as shown in FIGS. 3 and 4. The mirror support shaft 11 is inclined toward the widthwise center of the vehicle at an angle α in relation to a vertical line V. Furthermore, the mirror support shaft 101 is also inclined toward the front of the vehicle body in a vehicle body longitudinal direction at an angle β in relation to the vertical line V.

The second reflective mirror 16 is formed into a substantially rectangular shape, a top edge 102 and a bottom edge 103 which oppose each other are substantially horizontal, and an inside edge 104 and outside edge 105 which oppose each other are substantially vertical.

A top end 108 of the mirror support shaft 101 is mounted to a top plate 107 of the second mirror housing 93. A bottom end 112 of the mirror support shaft 101 is mounted to a bottom plate 111 of the second mirror housing 93. A first turning arm member 114 is turnably fitted in proximity to the top end 108 of the mirror support shaft 101. A second turning arm member 115 is turnably fitted in proximity to the bottom end 112 of the mirror support shaft 101. A mirror holder 116 is mounted to the first turning arm member 114 and the second turning arm member 115. A stopper member 117 for regulating the lowering of the mirror holder 116 is formed on the mirror support shaft 101.

Next, the action of the oblique forward vision device 11 according to the first embodiment will be described with reference to FIGS. 5A and sub.

Under these conditions, a first target object 53 and a second target object 54 are disposed in `proximity to the side and lower area of the left front of the vehicle 12, i.e., the left front wheel (not shown). Drivers are categorized into those of average height, those of smaller height, and those of greater height

FIG. 5A shows an image appearing in the second reflective mirror 16, wherein the area is greater in comparison with the standard image, and FIG. 5B shows a state in which a standard image appears in the second reflective mirror 16.

The oblique forward vision device 11 makes it possible for an area that had previously been a blind spot in the driver's line of sight to be visible via the second reflective mirror 16, because when the driver sitting in the driver seat 24 looks to the front left at the second reflective mirror 16, reflected light reaches the second reflective mirror 16 from the first target object 53 and the second target object 54 which had been blind spots in the driver's line of sight

Specifically, light reflected from the first target object 53 and the second target object 54 becomes light reflected by the first reflective mirror 15, the reflected light from the first reflective mirror 15 reaches the second reflective mirror 16, and the light reflected by the second reflective mirror 16 reaches the eyes of the driver; therefore, visual contact can be enabled with the situation in an area which would otherwise be a blind spot as shown in FIGS. 5A and 5B.

With the vision device 11, when a person of smaller height sits in the driver seat after a person of average height has set the second reflective mirror 16 so as to show the standard image as shown in FIG. 5B, the image shown in the second reflective mirror 16 appears as shown in FIG. 5A. The person of smaller height therefore changes the angle of the second reflective mirror 16 so that the standard image will appear.

In other words, since the second reflective mirror 16 is designed so that the turning trajectory of the second reflective mirror 16 is set in advance by the mirror support shaft 101 of the turning direction regulation means 97, when the driver pushes the inside edge 104 of the second reflective mirror 16 with their finger F, as shown by the double-dotted lines, the second reflective mirror 16 turns in a predetermined direction (the direction of arrow cl), as shown in FIGS. 3 through 5. Therefore, the second reflective mirror 16 is no longer turned up and down or left and right, and the angle of the second reflective mirror 16 is easily adjusted.

A person of greater height sees an image opposite of the image seen by a person of smaller height. Specifically, since the visible area is smaller than the area in FIG. 5B, an angle adjustment opposite of the angle adjustment made by the person of smaller height is preferably performed Specifically, when the outside edge 105 is pushed, the second reflective mirror 16 turns only in the predetermined direction (the direction of arrow c2).

### (Embodiment 2)

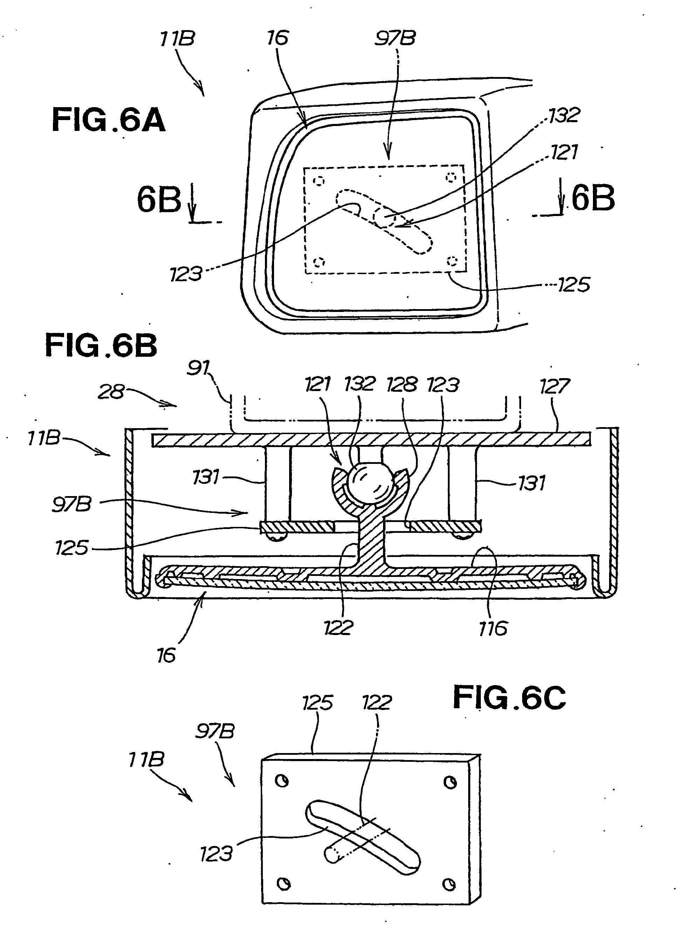

Next, an oblique forward vision device 11B according to a second embodiment of the present invention will be described in FIGS. 6A to 6B. Components similar to those in the first embodiment shown in FIGS. 1 to 5 are denoted by the same symbols and are not described.

Turning direction regulation means 97B according to the second embodiment comprises a ball joint 121 for supporting the second reflective mirror 16 in the front pillar 28, and a guiding part 123 for guiding the passage of an arm part 122 extending from the ball joint 121 to the second reflective mirror 16. The ball joint 121 is comprised of the arm part 122 and a joint part 128.

The guiding part 123 is a groove formed so as to pass through a turning angle restricting plate 125, and is formed into an arcuate shape.

In the turning direction regulation means 97B, a base part 127 is mounted to the steel front pillar main body 91 of the front pillar 28, the joint part 128 of the ball joint 121 is mounted in the center of the base part 127, the mirror holder 116 is mounted to the end of the arm part 122, a plurality of boss parts 131 disposed in proximity to the ball joint 121 is formed on the base part 127, the turning angle restricting plate 125 is mounted on the boss parts 131, and the guiding part 123 opens in the turning angle restricting plate 125. The numeral 132 indicates a turning fulcrum of the ball joint 121.

An oblong groove passing all the way through is presented as an example of the guiding part 123, but the guiding part may be something other than an oblong groove. For example, a guide rail can also be used, and the arm part 122 may be mounted on a sliding member that slides along the guide rail.

The oblique forward vision device 11B according to the second embodiment exhibits the same action and effects as the oblique forward vision device 11 according to the first embodiment. Specifically, the turning direction of the second reflective mirror 16 can be regulated.

### (Embodiment 3)

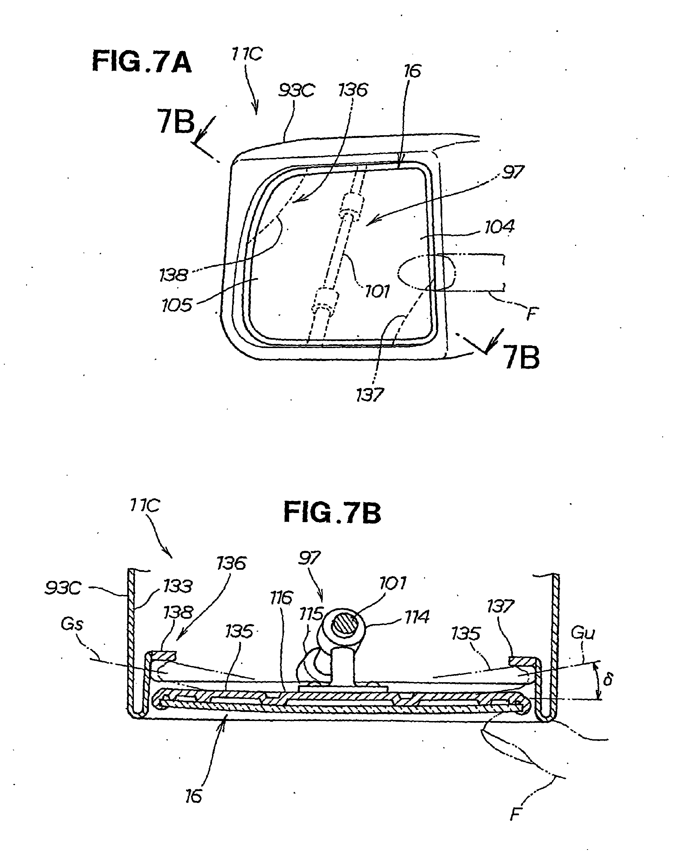

Next, an oblique forward vision device 11C according to a third embodiment of the present invention will be described in FIGS. 7A and 7B. Components similar to those of the first embodiment are denoted by the same symbols and are not described.

A second mirror housing 93C comprises a stopper part 136 in an interior 133 so as to allow the second reflective mirror 16 to turn at an angle δ. The stopper part 136 regulates further turning of the second reflective mirror 16 when a back surface 135 of the second reflective mirror 16 has turned by the angle δ.

The stopper part 136 is comprised of an inside-turn limiting part 137 for stopping the second reflective mirror 16 at an inside turning limit position Gu when the second reflective mirror 16 has turned toward the inside of the passenger compartment 13 about the mirror support shaft 101, and an outside-turn limiting part 138 for stopping the second reflective mirror 16 at an outside turning limit position Gs when the second reflective mirror 16 has turned toward the outside of the vehicle.

An example is presented in which the stopper part 136 is formed on the second mirror housing 93C, but the stopper part 136 can also be formed on regions other than the second mirror housing 93C.

In the oblique forward vision device 11C according to a third embodiment of the present invention, the inside edge 104 of the second reflective mirror 16 is turned by being pushed by the finger F, and when the second reflective mirror 16 reaches the inside turning limit position Gu of the turning angle δ, the back surface 135 of the second reflective mirror 16 comes in contact with the inside-turn limiting part 137 of the stopper part 136, and the second reflective mirror 16 therefore stops at the inside turning limit position Gu.

Thus, with the vision device 11C according to the third embodiment, the turning angle δ can also be regulated in addition to regulating the turning trajectory of the second reflective mirror 16, and the turning angle δ of the second reflective mirror 16 is easily adjusted.

### (Embodiment 4)

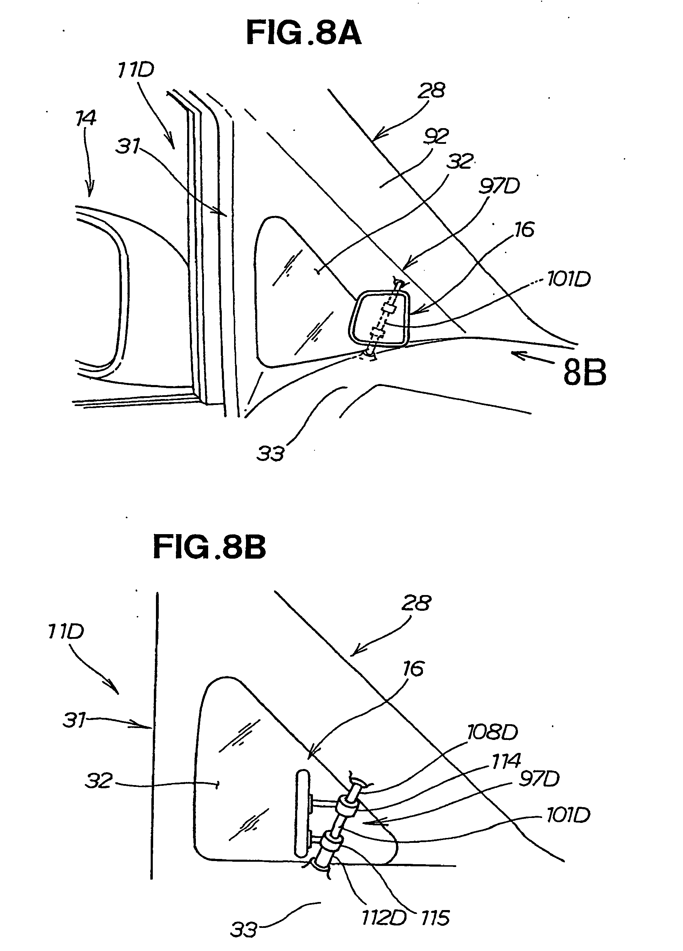

Next, an oblique forward vision device 11D of a fourth embodiment of the present invention will be described in FIGS. 8A and 8B. Components similar to those of the first embodiment shown in FIGS. 1 through 5 are denoted by the same numerical symbols and are not described.

Turning direction regulation means 97D according to the fourth embodiment is comprised of a mirror support shaft 101D, and the mirror support shaft 101D has the same incline as the mirror support shaft 101 of the first embodiment. A top end 108D of the mirror support shaft 101D is mounted to the front pillar internal member 92 of the front pillar 28, and a bottom end 112D is mounted to the instrument panel 33. The first turning arm member 114 and the second turning arm member 115 fit over the mirror support shaft 101D, and the second reflective mirror 16 is supported in the same positions as the second reflective mirror 16 of the first embodiment

The oblique forward vision device 11D according to the fourth embodiment exhibits the same action and effects as the oblique forward vision device 11 according to the first embodiment. Specifically, the second reflective mirror 16 can be turned within a predetermined range, and the angle of the second reflective mirror 16 is easily adjusted.

Additionally, in the oblique forward vision device 11D according to the fourth embodiment, one end (the top end) 108D of the mirror support shaft 101D is mounted to the front pillar internal member 92 while the other end (the bottom end) 112D is mounted to the instrument panel 33, and the second mirror housing 93 (FIG. 1) is thereby omitted. Therefore, the structure of the turning direction regulation means 97D is simplified.

### (Embodiment 5)

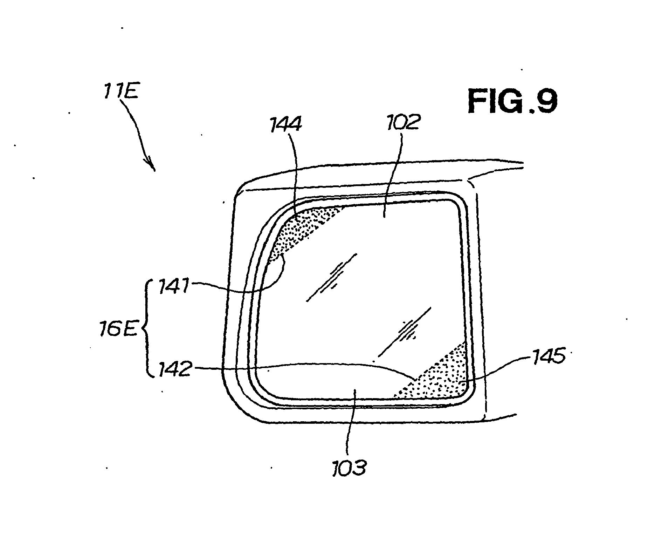

Next, an oblique forward vision device 11E according to a fifth embodiment of the present invention will be described in FIG. 9. Components similar to those of the first embodiment shown in FIGS. 1 through 5 are denoted by the same numerical symbols and are not described.

The second reflective mirror 16E according to the fifth embodiment is comprised of a first push indicator 141 and a second push indicator 142.

The top edge 102 and the bottom edge 103 of the second reflective mirror 16E are substantially horizontal. The second reflective mirror 16E has the first push indicator 141, which is provided to the front surface of an upper corner (top left corner) 144 near the inside wall of the vehicle body, and the second push indicator 142, which is provided to the front surface of a lower corner (bottom right corner) 145 nearer the center of the vehicle width. The first and second push indicators 141,142 are shown as speckled areas in FIG. 9.

The first push indicator 141 and the second push indicator 142 are both plastic films or sheets, which are bonded by an adhesive to the surface of the second reflective mirror 16E and are colored, e.g., in red or another color. Coloring makes it easier to discern the touchable positions.

The vision device 11E according to the fifth embodiment exhibits the same action and effects as the oblique forward vision device 11 according to the first embodiment. Specifically, the angle of the second reflective mirror 16 can be easily adjusted.

Additionally, with the oblique forward vision device 11E according to the fifth embodiment, the resistance against the turning of the turning direction regulation means 97 (FIG. 4) can be reduced by pushing the first push indicator 141 or the second push indicator 142 with a finger. Specifically, when the orientation of the second reflective mirror 16 is adjusted, the push positions on the second reflective mirror 16 can be clearly indicated to the passenger, and adjusting the turning direction and angle is made easier.

The oblique forward vision device of the present invention may be a suitable combination of the first through fifth The oblique forward vision device of the present invention is suitable as a device for enabling visual contact via a mirror with a front side area of a vehicle, which is a blind spot for a driver.

## Claims

1. A device for viewing an oblique forward area of a vehicle, comprising:
a first mirror housing (41) constituting a door mirror (14) mounted to a door (25) forming part of a vehicle body side part (95);
a mirror body (38) housed and held in the first mirror housing (41);
a first reflective mirror (15), provided on a front surface (43) of the first mirror housing (41), for showing a desired area from forward to side of the vehicle body side part (95);
a second reflective mirror (16; 16E) for reflecting light from the first reflective mirror (15) to a passenger; and
turning direction regulations means (97; 97B; 97D) for turnably supporting the second reflective mirror (16; 16E) one a passenger-compartment-side surface of a front pillar (28) supporting the door (25) so as to regulate a turning direction of the second reflective mirror (16; 1-6E);
**characterized in that** the turning direction regulation means (97; 97B; 97D) is adapted to restrict the regulation of the second reflective mirror (16; 16E) to a turning movement in a predetermined direction.

2. The device of claim 1, wherein the turning direction regulation means (97; 97D) comprises an upright mirror support shaft (101; 101D) for supporting the second reflective mirror (16; 16E), and the mirror support shaft (101; 101D) is inclined a predetermined angle (α) toward a widthwise center of the vehicle relative to a vertical line (V).

3. The device of claim 1, wherein the turning direction regulation means (97; 97D) comprises an upright mirror support shaft (101; 101D) for supporting the second reflective mirror (16; 16E), and the mirror support shaft (101, 101D) is inclined a predetermined angle (β) frontward in a longitudinal direction of the vehicle relative to a vertical line (V).

4. The device of claim 1, wherein the second reflective mirror (16E) is substantially square in shape and has a substantially horizontal- top edge (102) and bottom edge (103), a first push indicator (14) provided one a surface of an upper corner (144) near an inside surface of the vehicle body, and a second push indicator (142) provided on a surface of a lower corner (145) near a widthwise direction center of the vehicle.

5. The device of claim 1, wherein the turning direction regulation means (97B) comprises a ball joint (121) for supporting the second reflective mirror on the front pillar (28), and a guiding part (123) through which passes an arm part (122) that extends from the ball joint (121) to the second reflective mirror (16), the guiding part (123) guiding the arm part (122) so as to regulate the turning direction of the second reflective mirror (16).

6. The device of claim 1, wherein the front pillar (28) comprises a second mirror housing (93C) for housing the second reflective mirror (16), and the second mirror housing (93C) has inside thereof a stopper part (136) for restricting a turning angle of the second reflective mirror (16).

## Patentansprüche

1. Vorrichtung zum Betrachten eines schrägen Vorderbereichs eines Fahrzeugs, umfassend:
ein erstes Spiegelgehäuse (41), welches einen Türspiegel (14) darstellt, welcher an einer Tür (25) montiert ist, welche einen Abschnitt eines Karosserieseitenabschnitts (95) bildet;
einen Spiegelkörper (38), welcher in dem ersten Spiegelgehäuse (41) aufgenommen und gehalten ist;
einen ersten reflektierenden Spiegel (15), welcher an einer Vorderfläche (43) des ersten Spiegelgehäuses (41) bereitgestellt ist, zum Zeigen eines gewünschten Bereichs von vorne bis zu einer Seite des Karosserieseitenabschnitts (95);
einen zweiten reflektierenden Spiegel (16; 16E) zum Reflektieren von Licht von dem ersten reflektierenden Spiegel (15) zu einem Fahrgast; und Drehrichtungsregelungsmittel (97; 97B; 97D) zum drehbaren Halten des zweiten reflektierenden Spiegels (16; 16E) an einer
Fahrgastraumseitenfläche einer die Tür (25) haltenden A-Säule (28), um eine Drehrichtung des zweiten reflektierenden Spiegels (16; 16E) zu regeln;
**dadurch gekennzeichnet, dass** die Drehrichtungsregelungsmittel (97; 97B; 97D) dazu eingerichtet sind, die Regelung des zweiten reflektierenden Spiegels (16; 16E) auf eine Drehbewegung in einer vorgegebenen Richtung zu beschränken.

2. Vorrichtung nach Anspruch 1, wobei die Drehrichtungsregelungsmittel (97; 97D) eine aufrechte Spiegelhaltewelle (101; 101D) zum Halten des zweiten reflektierenden Spiegels (16; 16E) umfassen und die Spiegelhaltewelle (101; 101D) um einen vorgegebenen Winkel (α) in Richtung zu einer Breitenmitte des Fahrzeugs relativ zu einer vertikalen Linie (V) geneigt ist.

3. Vorrichtung nach Anspruch 1, wobei die Drehrichtungsregelungsmittel (97; 97D) eine aufrechte Spiegelhaltewelle (101; 101 D) zum Halten des zweiten reflektierenden Spiegels (16; 16E) umfassen und die Spiegelhaltewelle (101; 101D) um einen vorgegebenen Winkel (β) nach vorne in einer longitudinalen Richtung des Fahrzeugs relativ zu einer vertikalen Linie (V) geneigt ist.

4. Vorrichtung nach Anspruch 1, wobei der zweite reflektierende Spiegel (16E) eine im Wesentlichen rechtwinklige Form aufweist und einen im Wesentlichen horizontalen oberen Rand (102) und unteren Rand (103), einen ersten Drückanzeiger (141), welcher an einer Fläche einer oberen Ecke (144) in der Nähe einer Innenfläche der Karosserie bereitgestellt ist, und einen zweiten Drückanzeiger (142), welcher an einer Fläche einer unteren Ecke (145) in der Nähe einer Mitte in der Breitenrichtung des Fahrzeugs bereitgestellt ist, aufweist.

5. Vorrichtung nach Anspruch 1, wobei die Drehrichtungsregelungsmittel (97B) ein Kugelgelenk (121) zum Halten des zweiten reflektierenden Spiegels an derA-Säule (28) und einen Führungsabschnitt (123) aufweisen, durch welchen ein Armabschnitt (122) hindurchgeht, welcher sich von dem Kugelgelenk (121) zu dem zweiten reflektierenden Spiegel (16) erstreckt, wobei der Führungsabschnitt (123) den Armabschnitt (122) führt, um die Drehrichtung des zweiten reflektierenden Spiegels (16) zu regeln.

6. Vorrichtung nach Anspruch 1, wobei die A-Säule (28) ein zweites Spiegelgehäuse (93C) zum Aufnehmen des zweiten reflektierenden Spiegels (16) umfasst und das zweite Spiegelgehäuse (93C) einen Stopperabschnitt (136) im Inneren aufweist, um einen Drehwinkel des zweiten reflektierenden Spiegels (16) zu beschränken.

## Revendications

1. Dispositif pour visualiser la zone avant oblique d'un véhicule, comprenant :
un premier boîtier de rétroviseur (41) constituant un rétroviseur de porte (14) monté sur une porte (25) faisant partie d'une partie latérale (95) de corps de véhicule ;
un corps de rétroviseur (38) logé et maintenu dans le premier boîtier de rétroviseur (41) ;
un premier rétroviseur réfléchissant (15) prévu sur une surface avant (43) du premier boîtier de rétroviseur (41), pour montrer une zone souhaitée de l'avant vers le côté de la partie latérale (95) de corps de véhicule ;
un deuxième rétroviseur réfléchissant (16; 16E) pour refléter la lumière du premier rétroviseur réfléchissant (15) vers un passager ; et
des moyens de régulation de direction de rotation (97 ; 97B ; 97D) pour supporter de manière rotative le deuxième rétroviseur réfléchissant (16 ; 16E) sur une surface du côté du compartiment de passagers sur un pilier avant (28) supportant la porte (25) afin de réguler une direction de rotation du deuxième rétroviseur réfléchissant (16 ; 16E) ;
**caractérisé en ce que** les moyens de régulation de direction de rotation (97 ; 97B ; 97D) sont adaptés pour limiter la régulation du deuxième rétroviseur réfléchissant (16 ; 16E) à un mouvement de rotation dans une direction prédéterminée.

2. Dispositif selon la revendication 1, dans lequel les moyens de régulation de direction de rotation (97 ; 97D) comprennent un arbre de support de rétroviseur droit (101 ; 101D) pour supporter le deuxième rétroviseur réfléchissant (16 ; 16E), et l'arbre de support de rétroviseur (101 ; 101D) est incliné selon un angle (α) prédéterminé vers le centre dans le sens de la largeur du véhicule par rapport à une ligne verticale (V).

3. Dispositif selon la revendication 1, dans lequel les moyens de régulation de direction de rotation (97 ; 97D) comprennent un arbre de support de rétroviseur droit (101 ; 101D) pour supporter le deuxième miroir réfléchissant (16 ; 16E) et l'arbre de support de rétroviseur (101, 101D) est incliné selon un angle (β) prédéterminé vers l'avant dans une direction longitudinale du véhicule par rapport à une ligne verticale (V).

4. Dispositif selon la revendication 1, dans lequel le deuxième rétroviseur réfléchissant (16E) a une forme sensiblement carrée et a un bord supérieur (102) sensiblement horizontal et un bord inférieur (103), un premier indicateur de poussée (141) prévu sur une surface d'un coin supérieur (144) à proximité d'une surface intérieure du corps de véhicule, et un deuxième indicateur de poussée (142) prévu sur une surface d'un coin inférieur (145) à proximité du centre dans le sens de la largeur du véhicule.

5. Dispositif selon la revendication 1, dans lequel les moyens de régulation de direction de rotation (97B) comprennent un joint à rotule (121) pour supporter le deuxième rétroviseur réfléchissant sur le pilier avant (28) et une partie de guidage (123) à travers laquelle passe une partie de bras (122) qui s'étend à partir du joint à rotule (121) jusqu'au deuxième rétroviseur réfléchissant (16), la partie de guidage (123) guidant la partie de bras (122) afin de réguler la direction de rotation du deuxième rétroviseur réfléchissant (16).

6. Dispositif selon la revendication 1, dans lequel le pilier avant (28) comprend un deuxième boîtier de rétroviseur (93C) pour loger le deuxième rétroviseur réfléchissant (16), et le deuxième boîtier de rétroviseur (93C) a, à l'intérieur de ce dernier, une partie de butée (136) pour limiter un angle de rotation du deuxième rétroviseur réfléchissant (16).
